# EUROPEAN PATENT APPLICATION

(11) **EP 3 949 741 A1**
(43) Date of publication of application: **09.02.2022**
(21) Application number: 20785300.3
(22) Date of filing: 26.03.2020
(51) Int. Cl.: A23C 9/142, A23C 21/00, A23J 3/08

(54) **WHEY PRODUCTION METHOD**

(30) Priority: 29.03.2019 JP 2019067101
(71) Applicant: Morinaga Milk Industry Co., Ltd., Minato-ku Tokyo 108-8384 (JP)
(72) Inventor: WATAI Naoki, Zama-shi, Kanagawa 252-8583 (JP)
(74) Representative: Vossius & Partner Patentanwälte Rechtsanwälte mbB
(86) International application number: PCT/JP2020/013636
(87) International publication number: WO 2020/203634

(57) **Abstract**

A method for producing whey according to one aspect of the present invention includes a step of subjecting raw material milk containing casein and whey protein to a microfiltration membrane treatment under conditions of a temperature of less than 20°C and a solid content concentration of 10% by mass or more to obtain whey as a membrane permeation fraction.

## Description

### Technical Field

The present invention relates to a method for producing whey.

The present application claims priority based on Japanese Patent Application No. 2019-067101 filed in Japan on March 29, 2019, the contents of which are incorporated herein by reference.

### Background Art

Whey protein concentrate (hereinafter also referred to as "WPC") obtained by removing casein and the like from whey to concentrate whey protein and whey protein isolate (hereinafter also referred to as "WPI") obtained by removing casein and the like from whey to isolate whey protein are used as protein sources in nutritional supplements and the like.

As a raw material for WPC and WPI, cheese whey produced as a by-product during cheese production and acid whey obtained by allowing acid to act on milk to precipitate casein are often used, but whey obtained as a membrane permeation fraction by subjecting milk such as skim milk and raw milk to microfiltration (hereinafter also referred to as "MF") membrane treatment (hereinafter also referred to as "milk-derived whey") may also be used. WPC and WPI using cheese whey as a raw material contain fermentation products produced as by-products during cheese production. WPC and WPI using acid whey as a raw material have bad flavor, and waste liquid containing acid and acid compound is generated during production, so that load on environment is large. On the other hand, milk-derived whey does not contain impurities such as fermentation products and does not use acid, and thus has good flavor. In addition, no waste liquid containing acid and acid compound is generated.

Casein forms micellar structures in milk, so-called casein micelles (sometimes referred to as "micellar casein").

It has been reported that when skim milk is cooled to 7°C or lower, the casein content (particularly β-casein) in the supernatant (soluble phase) after centrifugation is increased due to dissociation of casein micelles, and that when skim milk is heated to 10°C or higher, the casein content in the soluble phase is decreased (NPL 1).

It has been also reported that when skim milk is fractionated using a ceramic MF membrane while maintaining the temperature at 10°C or 50°C, a membrane non-permeation fraction having a higher casein content than that at 10°C can be obtained at 50°C (NPL 2).

As a method for recovering β-casein from milk, a method has been proposed in which milk is cooled to a temperature at which β-casein is dissociated from micelles and subjected to MF membrane treatment, and the obtained membrane permeation fraction is subjected to desalting treatment (PTL 1).

As a method for producing a β-casein-containing composition from milk, a method has been proposed in which milk is preheated to at least 20°C and subjected to MF membrane treatment, and the obtained membrane permeation fraction is cooled to 0 to 15°C and subjected to MF membrane treatment (PTL 2).

### Citation List

### Patent Literature

[PTL 1] International Patent Publication WO2007/055932
[PTL 2] JP-T-2016-503660

### Non-Patent Literature

[NPL 1] Ali E. Ali et. al. "J. Dairy Research" (1980), 47,371-382
[NPL 2] Shane V. Crowley et. al. "International Dairy J." (2018), 81, 72-79

### Summary of Invention

### Technical Problem

In the production of milk-derived whey, an MF membrane through which casein micelles do not permeate is used in the MF membrane treatment that is usually carried out at a low temperature, but milk-derived whey obtained as a membrane permeation fraction thereof contains casein at a higher ratio than cheese whey or acid whey. This is probably because casein dissociated from the casein micelle permeates through the MF membrane.

Since milk-derived whey contains casein, WPC and WPI obtained from milk-derived whey also contain casein. WPC and WPI obtained from milk-derived whey have a higher content of casein than WPC and WPI obtained from cheese whey or acid whey, and thus have low solubility in water. In addition, when WPC or WPI obtained from milk-derived whey is added to an acidic beverage or the like, the casein is coagulated by the acid, and thus the use thereof is limited.

As described in NPL 2, it is considered that treatment of milk with an MF membrane while maintaining the milk at a high temperature of about 50°C is effective in reducing mixing of casein into a membrane permeation fraction.

However, in the production of milk-derived whey, when the MF membrane treatment is performed at a high temperature as described above, the following problems are concerned. Therefore, the MF membrane treatment is preferably performed at a low temperature (lower than 20°C, further 10°C or lower).
- Aggregation of whey protein due to exposure to a high temperature for a long time, and fouling of the MF membrane due to the aggregation. In addition, the production capacity, product quality, and yield are decreased due to fouling.
- Increase of thermophile bacteria.
- Deterioration of the MF membrane when an organic membrane is used as the MF membrane (generally, the allowable temperature of the organic membrane is about 50°C to 55°C, but deterioration is accelerated by long-term use at a high temperature).
- High cost when an inorganic membrane (ceramic membrane) generally having high heat resistance is used as the MF membrane (generally, the inorganic membrane has high heat resistance but is more expensive than the organic membrane).

None of NPLs 1 and 2 and PTLs 1 and 2 discuss reducing the casein contamination rate while performing MF membrane treatment at a low temperature.

An object of one aspect of the present invention is to provide a method for producing whey that can produce milk-derived whey having a low casein contamination rate by subjecting raw material milk to MF membrane treatment at a low temperature.

### Solution to Problem

[1] A method for producing whey, including a step of subjecting raw material milk containing casein and whey protein to microfiltration membrane treatment under conditions of a temperature of less than 20°C and a solid content concentration of 10% by mass or more to obtain whey as a membrane permeation fraction.
[2] The method for producing whey according to [1], further including a step of cooling the raw material milk to a temperature of 10°C or lower before the step of obtaining whey.
[3] The method for producing whey according to [1] or [2], further including a step of concentrating the raw material milk before the step of obtaining whey.
[4] The method for producing whey according to any one of [1] to [3], wherein in the step of obtaining whey, the raw material milk is subjected to microfiltration membrane treatment, and when the solid content concentration of the raw material milk exceeds 25% by mass, water addition is performed so that the solid content concentration becomes 10% by mass or more and 25% by mass or less.

### Advantageous Effects of Invention

According to the method for producing whey of the present invention, raw material milk is subjected to MF membrane treatment at a low temperature to produce milk-derived whey having a low casein contamination rate.

### Brief Description of Drawings

Fig. 1 is a schematic configuration diagram showing an example of an MF membrane processing apparatus.
Fig. 2 is a graph showing the results of Test Example 1.
Fig. 3 is a graph showing the results of Test Example 2.

### Description of Embodiments

In the present invention, the following measurement methods are used.

The fat content (% by mass) is determined by the Roese-Gottlieb method.

The protein content (% by mass) is determined by the combustion method.

The ash content (% by mass) is determined by the direct ashing method.

The moisture content (% by mass) is determined by the direct heat drying method. Specifically, the moisture content (% by mass) is defined as a weight loss ((mass (g) of sample before drying - mass (g) of sample after drying) / mass (g) of sample before drying × 100) when the sample is dried in a thermostat at 99°C for 4 hours.

The carbohydrate content (% by mass) is determined by subtracting the sum of the four components (fat, protein, ash, and moisture) from the sum of all components (calculation formula: 100 - (sum of the four components of fat, protein, ash, and moisture)).

The solid content concentration (% by mass) is calculated as a content other than the moisture content from the moisture content measured by the direct heat drying method (calculation formula: 100 - moisture content = solid content concentration).

The content (%) of casein in the protein is determined as the ratio of the total band intensity of "α-casein, β-casein, and κ-casein" to the total band intensity of "α-casein, β-casein, κ-casein, β-lactoglobulin, and α-lactalbumin" measured by SDS-PAGE (sodium dodecyl sulfate-polyacrylamide gel electrophoresis). In the description herein, the content of casein in the protein in whey is also referred to as "casein contamination rate".

The content (%) of whey protein in the protein is determined as the ratio of the total band intensity of "β-lactoglobulin and α-lactalbumin" to the total band intensity of "α-casein, β-casein, κ-casein, β-lactoglobulin, and α-lactalbumin" measured by SDS-PAGE (sodium dodecyl sulfate-polyacrylamide gel electrophoresis).

### <Method for Producing Whey>

The method for producing whey of the present invention includes a step of subjecting raw material milk containing casein and whey protein to MF membrane treatment under conditions of a temperature of less than 20°C and a solid content concentration of 10% by mass or more to obtain whey as a membrane permeation fraction (high solid content MF step) .

The method for producing whey of the present invention typically includes a step of concentrating the raw material milk to a solid content concentration of 10% by mass or more (concentration step) before the high solid content MF step.

The method for producing whey of the present invention may include a step of cooling the raw material milk to a temperature of 10°C or lower (cooling step) before the high solid content MF step, if necessary. When both the concentration step and the cooling step are included, typically, the concentration step is included after the cooling step.

The solid content concentration of the raw material milk is the ratio of the solid content to the total mass of the raw material milk.

### (Raw Material Milk)

The raw material milk contains at least casein and whey protein as the protein.

The raw material milk contains moisture in addition to the protein, and is liquid.

The raw material milk may contain fat, ash (minerals such as calcium and sodium), carbohydrate (lactose and the like), and the like.

An example of the composition of the raw material milk is shown below. In the following composition, the content of each component is based on the total mass of the raw material milk.
Moisture content: 50 to 99.8% by mass (further 75 to 98% by mass);
Protein content: 0.03 to 30% by mass (further 0.1 to 15% by mass);
Fat content: 0 to 40% by mass (further 0 to 20% by mass);
Ash content: 0.04 to 10% by mass (further 0.2 to 5% by mass);
Carbohydrate content: 0.1 to 20% by mass (further 1 to 10% by mass).

In the raw material milk, the content of casein in the protein is, for example, 15 to 99.9% (further 50 to 95%), and the content of whey protein in the protein is, for example, 0.1 to 85% (further 5 to 50%).

The raw material milk may be any milk containing casein and whey protein as the protein, and examples thereof include raw milk and skim milk. The skim milk may be obtained by defatting raw milk or by dissolving powdered skim milk in water.
The skim milk may be subjected to a concentration treatment or a desalting treatment.

The raw material milk is preferably derived from a mammal, more preferably derived from a cow, sheep, or goat, and still more preferably derived from a cow.

At least a part of the casein in the raw material milk typically forms micelles. That is, the raw material milk typically contains casein micelles.

Preferably, the casein micelles are not denaturated, i.e., have a native structure.

The casein micelles may contain calcium phosphate. That is, the casein micelles may be micelles composed of casein and calcium phosphate.

A part of the casein in the raw material milk may not form micelles.

When the solid content concentration of the raw material milk (the solid content concentration of the raw material milk before being concentrated in the concentration step) is less than 10% by mass, the concentration step is performed to adjust the solid content concentration to 10% by mass or more.

When the solid content concentration of the raw material milk is 10% by mass or more (for example, when the raw material milk is obtained by dissolving powdered skim milk in water so that the solid content concentration is 10% by mass or more), the concentration step may not be performed. The concentration step may be performed to further increase the solid content concentration.

The solid content concentration of raw milk is generally 11 to 14% by mass with respect to the total mass of raw milk, and the solid content concentration of skim milk obtained by defatting raw milk is generally 8 to 10% by mass with respect to the total mass of skim milk.

### (Cooling Step)

In the cooling step, the raw material milk is cooled to a temperature T₀ of 10°C or lower. Thus, deterioration of the raw material milk, proliferation of microorganisms, and fouling of the MF membrane can be suppressed. The temperature T₀ is preferably 7°C or lower, more preferably 4°C or lower. The lower limit of the temperature T₀ is, for example, 2°C. The temperature T₀ may be 2 to 10°C, 2 to 7°C, or 2 to 4°C.

The temperature of the raw material milk before cooling to the temperature T₀ is, for example, higher than 10°C and 50°C or lower.

After the raw material milk is cooled to the temperature T₀ in the cooling step, the raw material milk can be held at the temperature T₀ before being subjected to the concentration step or the high solid content MF step. The time (holding time) for holding the raw material milk at the temperature T₀ is not particularly limited, but for example, 1 minute or more, 1 hour or more, 5 hours or more, 12 hours or more, 1 day or more, or 2 days or more, and 3 days or less, 5 days or less, or 7 days or less. The holding time may be 1 minute or more and 3 days or less, 1 hour or more and 3 days or less, 5 hours or more and 5 days or less, 12 hours or more and 5 days or less, 1 day or more and 7 days or less, or 2 days or more and 7 days or less.

In the cooling step, a part of casein such as β-casein is dissociated from the casein micelle. The dissociated casein generally permeates the MF membrane to increase the casein contamination rate of whey. However, according to the method for producing whey of the present invention, unexpectedly, even when raw material milk subjected to the cooling step is used, the casein contamination rate can be reduced.

### (Concentration Step)

In the concentration step, the raw material milk is concentrated. The solid content concentration of the raw material milk after concentration is the solid content concentration of the raw material milk at the time of treatment in the high solid content MF step, and is 10% by mass or more.

As the concentration method, known methods such as MF membrane treatment, ultrafiltration (UF) membrane treatment, nanofiltration (NF) membrane treatment, reverse osmosis (RO) membrane treatment, and concentration under reduced pressure can be employed. The MF membrane treatment is preferable in that concentration and separation can be performed at the same time, denaturation and deterioration of components due to heating can be prevented, flavor can be maintained, and energy can be saved.

When the raw material milk is concentrated by the MF membrane treatment, the temperature of the raw material milk during the MF membrane treatment is preferably lower than 20°C, and more preferably 10°C or lower, as in the subsequent high solid content MF step. The lower limit of the temperature of the raw material milk at the time of the MF membrane treatment is, for example, 2°C, further 3°C. The temperature of the raw material milk during the MF membrane treatment may be 2°C or higher and lower than 20°C, 2 to 15°C, 2 to 10°C, or 3 to 10°C.

The pressure of the MF membrane treatment is controlled within a range in which a membrane permeation fraction is obtained through the MF membrane. For example, the inlet pressure of the membrane can be set to 0.01 to 1 MPa.

When the raw material milk is concentrated by the MF membrane treatment, the concentration step and the high solid content MF step may be continuously performed.

### (High Solid Content MF Step)

In the high solid content MF step, the raw material milk is subjected to an MF membrane treatment under conditions of a temperature of lower than 20°C and a solid content concentration of 10% by mass or more.

In the MF membrane treatment, the raw material milk and the MF membrane are brought into contact with each other.

In general, casein micelles do not permeate through the MF membrane, but whey protein and casein that does not form micelles permeate through the MF membrane. Therefore, when the raw material milk is subjected to the MF membrane treatment, a membrane permeation fraction (permeate) having a reduced content of casein is obtained.

The pore diameter of the MF membrane is, for example, 0.01 µm to 1 µm, preferably 0.02 µm to 0.6 µm, more preferably 0.05 µm to 0.2 µm, and still more preferably 0.1 µm to 0.2 µm. The pore diameter of the MF membrane is measured by, for example, a method of microscopic observation using an electron microscope or the like, a mercury intrusion method, a filtration rate method, a gas adsorption method, a streaming potential method, a positron annihilation lifetime method, a method of measuring separation characteristics using particles having a known particle size, or the like.

In general, in the membrane treatment, it is considered that the separation efficiency is better when the solid content concentration of the supply liquid supplied to the membrane is lower.

As a result of intensive studies conducted by the present inventors, it has been unexpectedly found that as the solid content concentration of the raw material milk during the MF membrane treatment is higher, the separation efficiency between whey protein and casein is high and the casein contamination rate in the membrane permeation fraction is low.

When the solid content concentration of the raw material milk is 10% by mass or more, the permeation of casein through the MF membrane can be suppressed, and milk-derived whey having a low casein contamination rate can be obtained. The solid content concentration of the raw material milk is preferably 12% by mass or more, and more preferably 15% by mass or more.

On the other hand, if the solid content concentration of the raw material milk is too high, there is a concern that fouling will occur. In order to suppress the occurrence of fouling, the solid content concentration of the raw material milk is preferably 25% by mass or less, and more preferably 20% by mass or less.

In this step, the solid content concentration of the raw material milk during the MF membrane treatment is preferably, for example, 10 to 25% by mass, 10 to 20% by mass, 12 to 25% by mass, 12 to 20% by mass, 15 to 25% by mass, or 15 to 20% by mass.

When the temperature of the raw material milk during the MF membrane treatment is lower than 20°C, it is possible to suppress the increase of the thermophile bacteria in the MF membrane treatment step. Since this temperature is the allowable temperature of an organic membrane, the MF membrane treatment can be performed using the organic membrane as the MF membrane. The temperature of the raw material milk during the MF membrane treatment is preferably 15°C or lower, and more preferably 10°C or lower. The lower limit of the temperature of the raw material milk at the time of the MF membrane treatment is, for example, 2°C, further 3°C. The temperature of the raw material milk during the MF membrane treatment may be 2°C or higher and lower than 20°C, 2 to 15°C, 2 to 10°C, or 3 to 10°C.

The pressure of the MF membrane treatment is controlled within a range in which a membrane permeation fraction is obtained through the MF membrane. For example, the inlet pressure of the membrane can be set to 0.01 to 1 MPa.

The MF membrane treatment can be performed using a known MF membrane treatment apparatus.

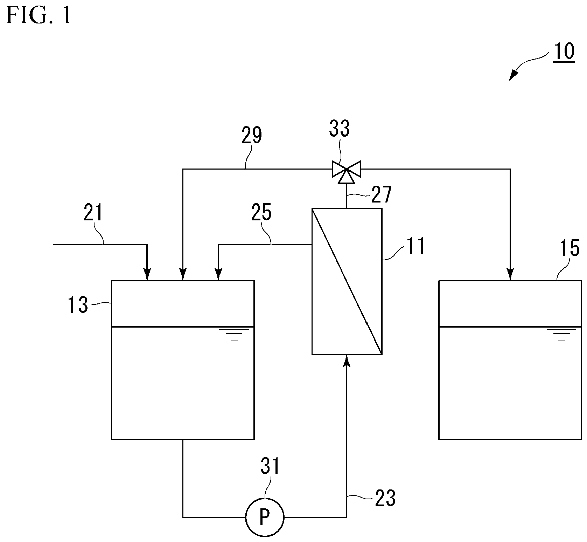

Fig. 1 shows an example of an MF membrane treatment apparatus.

An MF membrane treatment apparatus 10 of this example includes an MF membrane treatment section 11 having an MF membrane, a supply liquid tank 13 for storing a supply liquid (raw material milk) to be supplied to the MF membrane treatment section 11, a permeated liquid tank 15 for storing a membrane permeation fraction, a water addition pipe 21 for supplying water to the supply liquid tank 13, a supply liquid flow path 23 for supplying the supply liquid of the supply liquid tank 13 to the MF membrane treatment section 11, a first return flow path 25 for returning a membrane non-permeation fraction from the MF membrane treatment section 11 to the supply liquid tank 13, and a permeated liquid flow path 27 for supplying a membrane permeation fraction from the MF membrane treatment section 11 to the permeated liquid tank 15. A pump 31 is provided in the supply liquid flow path 23. A second return flow path 29 for returning the membrane permeation fraction to the supply liquid tank 13 is connected to the permeated flow path 27. A three-way valve 33 is provided at a connection position of the second return flow path 29. The three-way valve 33 distributes the membrane permeation fraction to the permeated liquid tank 15 or the supply liquid tank 13.

In the MF membrane treatment apparatus 10, for example, the MF membrane treatment is performed in the following procedure.

The pump 31 is operated to supply the supply liquid in the supply liquid tank 13 to the MF membrane treatment section 11. As a result, the supply liquid is separated into a membrane non-permeation fraction (retentate) and a membrane permeation fraction (permeate).

The membrane non-permeation fraction is returned to the supply liquid tank 13. The returned membrane non-permeation fraction is supplied to the MF membrane treatment section 11 as a supply liquid.

The membrane permeation fraction is returned to the supply liquid tank 13 when the supply liquid is not concentrated, and is supplied to the permeated liquid tank 15 when the supply liquid is concentrated.

When the raw material milk is subjected to the MF membrane treatment in such a manner that the membrane non-permeation fraction is returned to the supply liquid tank 13 and the membrane permeation fraction is not returned (hereinafter, the MF membrane treatment is also referred to as "circulation treatment"), the solid content concentration of the supply liquid is gradually increased. When the solid content concentration is increased and exceeds the preferable upper limit value described above, water addition can be performed to the supply liquid in order to decrease the solid content concentration of the supply liquid. In order to perform water addition to the raw material milk (supply liquid), for example, water may be supplied from the water addition pipe 21 to the supply liquid tank 13.

In the present invention, the raw material milk may be subjected to the MF membrane treatment in such a mode that both the membrane non-permeation fraction and the membrane permeation fraction are not returned to the supply liquid tank. Examples of such a mode include a mode of continuous MF membrane treatment in which, in equipment in which a plurality of MF membranes are connected in series, raw material milk is treated with the first MF membrane, and then the obtained membrane non-permeation fraction is treated with the next MF membrane as new raw material milk (supply liquid). In such continuous treatment, since the solid content concentration of the membrane non-permeation fraction is continuously increased, when the solid content concentration exceeds the preferable upper limit value described above, water addition can be performed in order to decrease the solid content concentration of the supply liquid. The timing of water addition is, for example, when the solid content concentration of the raw material milk (supply liquid) exceeds the preferable upper limit value described above. Even when the solid content concentration of the raw material milk (supply liquid) does not exceed the preferable upper limit value described above, water addition can be performed as necessary.

In the present invention, the amount of water addition can be set so that the solid content concentration of the raw material milk (supply liquid) after water addition does not become less than 10% by mass in order to suppress an increase in the casein contamination rate.

The timing of water addition is preferably when the solid content concentration of the raw material milk (supply liquid) exceeds 25% by mass, and more preferably when the solid content concentration of the raw material milk (supply liquid) exceeds 20% by mass. Specifically, the water addition is carried out so that the solid content concentration is, for example, 10% by mass or more and 25% by mass or less, 10% by mass or more and 20% by mass or less, 12% by mass or more and 25% by mass or less, 12% by mass or more and 20% by mass or less, 15% by mass or more and 25% by mass or less, or 15% by mass or more and 20% by mass or less.

In the present invention, the solid content concentration of the raw material milk (supply liquid) may temporarily become less than 10% by mass at the start of the MF membrane treatment or at the time of water addition, but the solid content concentration of the raw material milk (supply liquid) is preferably 10% by mass or more in a time of 70% or more with respect to the total treatment time of the MF membrane treatment (total operation time of the MF membrane treatment apparatus). In addition, in the present invention, it is preferable that the solid content concentration of the raw material milk (supply liquid) is 12% by mass or more in a time of 50% or more with respect to the total treatment time of the MF membrane treatment.

The total treatment time of the MF membrane treatment is not particularly limited, and is, for example, 0.5 hours or more and 24 hours or less, further 1 hour or more and 15 hours or less.

The obtained membrane permeation fraction can be used as it is or diluted with water as necessary to obtain whey.

The whey obtained by the production method of the present invention (hereinafter also referred to as "the present whey") contains an MF membrane permeation fraction of raw material milk. Further, the whey of the present invention may be composed of a microfiltration membrane permeation fraction of raw material milk.

As described above, since whey protein permeates through the MF membrane, the MF membrane permeation fraction of the raw material milk contains whey protein. Thus, the present whey contains at least whey protein as a protein.

The present whey may contain only whey protein as the protein, or may further contain other proteins or substances derived from proteins. Examples of other proteins and substances derived from proteins include casein, glycomacropeptide, peptide derived from whey protein, peptide derived from casein, amino acid, and non-protein nitrogen.

The content of casein in the protein (casein contamination rate) is preferably less than 30%, more preferably less than 25%, and still more preferably less than 20%. WPC and WPI obtained from such whey can be used in a wide range of applications including acidic beverages. The lower limit of the content of casein in the protein is not particularly limited and may be 0%, but is preferably 0.1% or more from the viewpoint of ease of production.

The content of whey protein in the protein is for example greater than 50%, further greater than 75%, and may be 100%.

The present whey may further contain moisture, fat, ash (minerals such as calcium and sodium), carbohydrates (lactose and the like) and the like in addition to protein.

An example of the composition of the present whey is shown below. In the following composition, the content of each component is a percentage to the total mass of whey.
Moisture content: 84 to 99.6% by mass (further 90 to 97.5% by mass);
Protein content: 0.03 to 1.5% by mass (further 0.2 to 0.8% by mass);
Fat content: 0 to 0.5% by mass (further 0 to 0.3% by mass);
Ash content: 0.04 to 1.7% by mass (further 0.3 to 1% by mass);
Carbohydrate content: 0.3 to 12% by mass (further 2 to 8% by mass).

Conventionally, cheese whey and acid whey are often used as raw materials for WPC and WPI, as described above. Cheese whey contains a milk coagulating enzyme such as rennet (whose main component is a protease called chymosin) which is an additive necessary for cheese production. Acid whey contains a component that is not derived from milk, such as a pH adjusting agent.

In the present whey, the microfiltration membrane permeation fraction of the raw material milk does not contain the milk coagulating enzyme, and is different from cheese whey in this respect. The present whey also preferably does not contain the milk coagulating enzyme. "Does not contain the milk coagulating enzyme" means that the content of the milk coagulating enzyme is less than the detection limit (lower limit) when a normal quantitative analysis is performed on a sample (a microfiltration membrane permeation fraction of raw material milk or the present whey).

In addition, in the present whey, the microfiltration membrane permeation fraction of the raw material milk does not contain the component that is not derived from milk, and is different from acid whey in this respect. The present whey also preferably does not contain the component that is not derived from milk. "Does not contain the component that is not derived from milk" specifically means that the content of the component that is not derived from milk is less than the detection limit (lower limit) when a normal quantitative analysis is performed on a sample (a microfiltration membrane permeation fraction of raw material milk or the whey of the present invention).

Preferable aspects of the present whey include the following [1] to [7].
[1] Whey containing a microfiltration membrane permeation fraction of raw material milk, not containing milk coagulating enzyme, and having a casein content in protein of less than 13%.
[2] Whey containing a microfiltration membrane permeation fraction of raw material milk, not containing chymosin, and having a casein content in protein of less than 13%.
[3] Whey containing a microfiltration membrane permeation fraction of raw material milk, not containing a component that is not derived from milk, and having a casein content in protein of less than 13%.
[4] Whey containing a microfiltration membrane permeation fraction of raw material milk, not containing milk coagulating enzyme and a component that is not derived from milk, and having a casein content in protein of less than 13%.
[5] Whey containing a microfiltration membrane permeation fraction of raw material milk, not containing chymosin and a component that is not derived from milk, and having a casein content in protein of less than 13%.
[6] Whey containing at least whey protein as protein, not containing milk coagulating enzyme and a component that is not derived from milk, and having a casein content in protein of less than 13%.
[7] Whey containing at least whey protein as protein, not containing chymosin and a component that is not derived from milk, and having a casein content in protein of less than 13%.

### (Application)

The application of the present whey is not particularly limited, and the whey can be used in the same application as conventional whey.

For example, WPC or WPI can be obtained by subjecting the present whey to UF membrane treatment and drying and pulverizing the obtained protein-concentrated fraction (retentate).

When the UF membrane is used, in general, whey protein does not permeate through the UF membrane, and other components (lactose, minerals, moisture, and the like) having a smaller size than the whey protein permeate through the UF membrane. Therefore, a protein-concentrated fraction having an increased protein content can be obtained by subjecting whey to the UF membrane treatment. The pore diameter of the UF membrane is, for example, 100 nm or less, preferably 1 to 100 nm, and more preferably 1 to 10 nm. As a drying method, a known drying method such as a spray drying method can be appropriately employed. The drying temperature is, for example, 150 to 200°C.

For example, WPI can be obtained by subjecting the present whey to MF membrane treatment, subjecting the obtained membrane permeation fraction to UF membrane treatment, and drying and pulverizing the obtained protein-concentrated fraction.

The WPC or WPI obtained from the present whey has a lower casein contamination rate than the WPC or WPI obtained from conventional milk-derived whey. Therefore, it has excellent solubility in water and is easily blended into a transparent beverage. In addition, since the casein contamination rate is low, it is difficult to coagulate even when it is blended in an acidic beverage or the like, and it can be blended in various foods and drinks. In addition, since it is excellent in digestive and absorptive properties and has a high purity of whey protein rich in branched-chain amino acids, it is suitable as a raw material for various nutritional foods, infant milk, foods for sick persons, and the like. Further, since the product is maintained at a low temperature throughout the production process, there is a low risk of propagation of microorganisms in the product, especially thermophile bacteria. Therefore, it is suitable as a raw material for various beverages, nutritional foods, infant milk, foods for sick persons, and the like. Therefore, the present whey is suitable as a raw material for WPC or WPI.

### Examples

Hereinafter, the present invention will be described in more detail with reference to Examples. However, the present invention is not limited to these examples. In the examples, the MF membrane treatment performed in such a manner that not only the membrane non-permeation fraction (retentate) but also the membrane permeation fraction (permeate) is returned to a supply liquid tank is referred to as "whole circulation".

### <Measurement Method>

The fat content (% by mass) was determined by the Roese-Gottlieb method.

The protein content (% by mass) was determined by the combustion method.

The ash content (% by mass) was determined by the direct ashing method.

The moisture content (% by mass) was determined by the direct heat drying method.

The carbohydrate content (% by mass) was determined by subtracting the sum of the four components (fat, protein, ash, and moisture) from the sum of all components (calculation formula: 100 - (sum of the four components of fat, protein, ash, and moisture)).

The solid content concentration (% by mass) was calculated as a content other than the moisture content from the moisture content measured by the direct heat drying method (calculation formula: 100 - moisture content = solid content concentration).

The content of casein in the protein (casein contamination rate) was measured by SDS-PAGE (sodium dodecyl sulfate-polyacrylamide gel electrophoresis). SDS-PAGE was subjected to electrophoresis according to the Q-PAGE system (TEFCO) using a separation gel of 5-14% Q-PAGE mini (TEFCO). The electrophoresis tank and the power supply used were manufactured by ATTO Corporation. Electrophoresis was performed for 1 hour under the conditions of a voltage of 200 V and a current of 40 mA. After electrophoresis, the separated gel was removed, and the gel was stained for 3 hours using Ezstain AQUA (ATTO Corporation). The gel was then destained with distilled water for 4 hours. The stained and destained gel was subjected to Gel DOC^{™} EZ Imager (Bio-Rad Laboratories, Inc.) to measure the staining intensity of each stained band in the gel. After SDS-PAGE, the casein contamination rate was determined as the ratio of the total band intensity of "α-casein, β-casein, and κ-casein" to the total band intensity of "α-casein, β-casein, κ-casein, β-lactoglobulin, and α-lactalbumin" (corresponding to the total protein).

### <Test Example 1>

In this test, the raw material milk (supply liquid) was gradually diluted during the MF membrane treatment, and the influence of the solid content concentration of the raw material milk during the MF membrane treatment on the casein contamination rate was examined.

Skim milk (solid content concentration: 9.0% by mass) obtained by separation from raw milk by Morinaga Milk Industry Co., Ltd. was stored at 4°C for 2 days.

Next, the temperature of 46 kg of the skim milk was adjusted to 10°C, and the whole circulation treatment was performed by the MF membrane treatment apparatus having the configuration shown in Fig. 1 while maintaining the temperature at 10°C. The membrane inlet pressure was maintained at 0.1 MPa during the whole circulation treatment. In addition, both the membrane non-permeation fraction (retentate) and the membrane permeation fraction (permeate) were returned to the supply liquid tank 13 without collecting the membrane permeation fraction in the permeated liquid tank 15. After 90 minutes and 150 minutes from the start of the whole circulation treatment, 10 kg of water addition was performed respectively. That is, in this test example, the effect of water addition on the casein contamination rate in the membrane permeation fraction was evaluated without substantially concentrating the raw material milk.

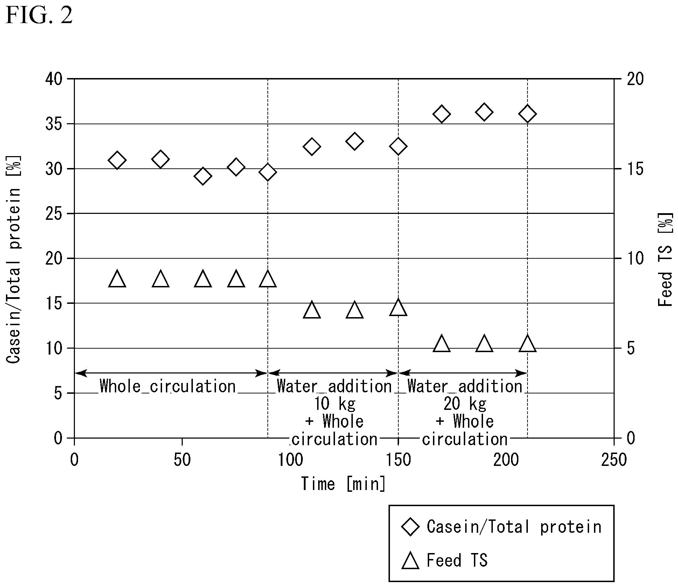

During the circulation treatment, about 40 g of the supply liquid and the permeate were periodically collected, and the solid content concentration and the casein contamination rate were measured. The results are shown in Table 1 and Fig. 2.

In Table 1 and Fig. 2, "Time", "Casein / Total protein", and "Feed TS" respectively indicate the elapsed time from the start of the supply of skim milk to the MF membrane treatment section of the MF membrane treatment apparatus, the casein contamination rate of the membrane permeation fraction, and the solid content concentration of the supply liquid (the same applies hereinafter).

As shown in Table 1 and Fig. 2, as the solid content concentration of the supply liquid was decreased due to the water addition, the casein contamination rate of the membrane permeation fraction was increased.

**Table 1**

| Time [min] | Casein / Total protein [%] | Feed TS [%] |
|---|---|---|
| 20 | 30.8 | 8.8 |
| 40 | 31.0 | 8.8 |
| 60 | 29.0 | 8.9 |
| 75 | 30.1 | 8.8 |
| 90 | 29.7 | 8.9 |
| 110 | 32.4 | 7.2 |
| 130 | 32.9 | 7.2 |
| 150 | 32.5 | 7.2 |
| 170 | 35.9 | 5.2 |
| 190 | 36.2 | 5.2 |
| 210 | 36.0 | 5.2 |

### <Test Example 2>

In this test, the raw material milk (supply liquid) was concentrated stepwise during the MF membrane treatment and then diluted stepwise, and the influence of the solid content concentration of the raw material milk during the MF membrane treatment on the casein contamination rate was examined.

Skim milk (solid content concentration: 9.2% by mass) obtained by separation from raw milk by Morinaga Milk Industry Co., Ltd. was stored at 4°C for 2 days.

Next, the temperature of 61 kg of the skim milk was adjusted to 10°C, and the MF membrane treatment was performed by the MF membrane treatment apparatus having the configuration shown in Fig. 1 while maintaining the temperature at 10°C. The membrane inlet pressure was maintained at 0.1 MPa during the MF membrane treatment. In this test example, the whole circulation treatment and the circulation treatment were alternately performed in the order shown in Table 2, and the membrane permeation fraction (permeate) was collected during the circulation treatment. That is, the membrane permeation fraction (permeate) was collected as 20 kg over 13 minutes from 30 minutes, 16 kg over 16 minutes from 83 minutes, and 6 kg over 12 minutes from 139 minutes after the start of the supply of skim milk to the MF membrane treatment section of the MF membrane treatment apparatus, and was returned to the supply liquid tank 13 for the other periods. In addition, 5 kg of water addition was performed 191 minutes, 231 minutes, and 271 minutes after the start of the MF membrane treatment, respectively and 15kg of water addition was performed 311 minutes after the start of the MF membrane treatment. In Table 2, "permeation fraction" is "membrane permeation fraction".

**Table 2**

| Treatment time (minutes) | MF treatment method |
|---|---|
| 0 to 30 | Whole circulation (for 30 minutes) |
| to 43 | Circulation treatment (collecting permeation fraction for 13 minutes) |
| to 83 | Whole circulation (for 40 minutes) |
| to 99 | Circulation treatment (collecting permeation fraction for 16 minutes) |
| to 139 | Whole circulation (for 40 minutes) |
| to 151 | Circulation treatment (collecting permeation fraction for 12 minutes) |
| to 191 | Whole circulation (for 40 minutes) + Water addition 5 kg |
| to 231 | Whole circulation (for 40 minutes) + Water addition 5 kg |
| to 271 | Whole circulation (for 40 minutes) + Water addition 5 kg |
| to 311 | Whole circulation (for 40 minutes) + Water addition 15 kg |
| to 351 | Whole circulation (for 40 minutes) |

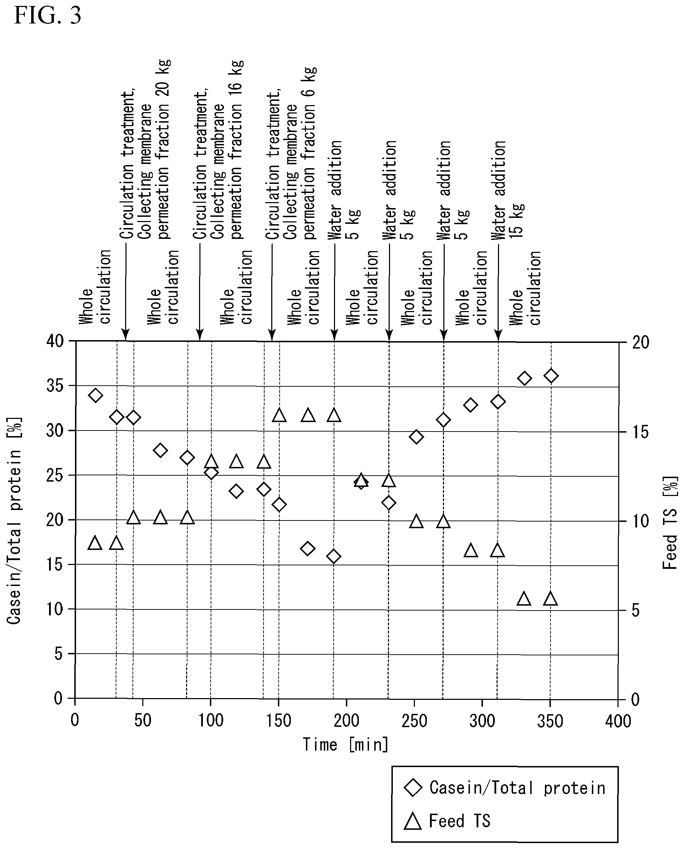

During the circulation treatment, about 40 g of the supply liquid and the membrane permeation fraction were periodically collected, and the solid content concentration and the casein contamination rate were measured. The results are shown in Table 3 and Fig. 3.

As shown in Table 3 and Fig. 3, the casein contamination rate of the membrane permeation fraction was decreased as the solid content concentration of the supply liquid was increased, and the casein contamination rate of the membrane permeation fraction was increased as the solid content concentration of the supply liquid was decreased.

**Table 3**

| Time [min] | Casein / Total protein [%] | Feed TS [%] |
|---|---|---|
| 15 | 33.8 | 8.8 |
| 30 | 31.4 | 8.8 |
| 43 | 31.4 | 10.2 |
| 63 | 27.9 | 10.2 |
| 83 | 27.0 | 10.2 |
| 99 | 25.4 | 13.3 |
| 119 | 23.2 | 13.3 |
| 139 | 23.5 | 13.3 |
| 151 | 21.8 | 15.9 |
| 171 | 16.9 | 15.9 |
| 191 | 16.1 | 15.9 |
| 211 | 24.3 | 12.3 |
| 231 | 22.1 | 12.3 |
| 251 | 29.3 | 10.0 |
| 271 | 31.3 | 10.0 |
| 291 | 32.9 | 8.4 |
| 311 | 33.3 | 8.4 |
| 331 | 36.0 | 5.7 |
| 351 | 36.2 | 5.7 |

### Reference Signs List

- 10: MF membrane treatment apparatus
- 11: MF membrane treatment section
- 13: Supply liquid tank
- 15: Permeated liquid tank
- 21: Water addition pipe
- 23: Supply liquid flow path
- 25: First return flow path
- 27: Permeated liquid flow path
- 29: Second return flow path
- 31: Pump
- 33: Three-way valve

## Claims

1. A method for producing whey, comprising a step of subjecting raw material milk containing casein and whey protein to microfiltration membrane treatment under conditions of a temperature of less than 20°C and a solid content concentration of 10% by mass or more to obtain whey as a membrane permeation fraction.

2. The method for producing whey according to claim 1, further comprising a step of cooling the raw material milk to a temperature of 10°C or lower before the step of obtaining whey.

3. The method for producing whey according to claim 1 or 2, further comprising a step of concentrating the raw material milk before the step of obtaining whey.

4. The method for producing whey according to any one of claims 1 to 3, wherein in the step of obtaining whey, the raw material milk is subjected to microfiltration membrane treatment, and when the solid content concentration of the raw material milk exceeds 25% by mass, water addition is performed so that the solid content concentration becomes 10% by mass or more and 25% by mass or less.
